(19) Europäisches Patentamt / European Patent Office / Office européen des brevets

(11) **EP 2 843 394 A1**

(12) **EUROPEAN PATENT APPLICATION**
published in accordance with Art. 153(4) EPC

(43) Date of publication:
**04.03.2015 Bulletin 2015/10**

(51) Int Cl.:
***G01N 21/53*** *(2006.01)*

(21) Application number: **13733044.5**

(86) International application number:
**PCT/IB2013/053308**

(22) Date of filing: **26.04.2013**

(87) International publication number:
**WO 2013/160877 (31.10.2013 Gazette 2013/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.04.2012 PT 12106279 U**

(71) Applicants:
• **Universidade de Aveiro**
  **Aveiro 3810-193 (PT)**
• **Instituto de Telecomunicacoes**
  **3810-193 Aveiro (PT)**

(72) Inventors:
• **BOTAS BILRO, Lúcia Maria**
  **P-3810-042 Aveiro (PT)**
• **DA GRAÇA FERREIRA, Ricardo Xavier**
  **P-3750-308 Águeda (PT)**
• **JACOB KEIZER, Jan**
  **P-3750-170 Águeda (PT)**
• **PRATS ALEGRE, Sérgio**
  **P-3810-000 Aveiro (PT)**
• **NUNES NOGUEIRA, Rogério**
  **P-3800-388 Aveiro (PT)**

(74) Representative: **Ferreira, Maria Silvina**
  **Clarke, Modet & Co.**
  **Rua Castilho, 50-9°**
  **1269-163 Lisboa (PT)**

(54) **TURBIDITY MEASURING SENSOR AND METHOD**

(57)    The present invention describes a low-cost, portable multi-parameter, turbidity sensor based on optical fiber.

The sensor quantifies the transmission and scattering of radiation (nephelometry) in a fluid through radiation emission in two or more wavelengths. The invention can be used to estimate concentration of suspended sediments, to distinguish the type of sediment based on color, to distinguish different particle-size classes, and to identify and determine the concentrations of different suspended-sediment fractions.

The sensor comprises the following elements: a radiation emitter of two or more wavelengths (2), a radiation receiver to measure the transmitted radiation (2), a radiation receiver to measure the scattered radiation (3), and an inner space (4) of the measurement unit containing the fluid being evaluated. The first three elements are located at the specified distances L1, L2 and L3, and at specified angles A1 and A2, as shown in the Figure

Fig. 1

## Description

### Field/Background

The present invention pertains to the class of portable turbidity sensors for determining concentrations and intrinsic characteristics of solids suspended in fluids, through the measurement of the transmission and scattering of radiation in two or more wavelengths.

### Summary

The present invention describes a sensor for the measurement of the turbidity of fluids that is composed of:

- an emitter of a radiation beam (1) at two or more wavelengths (C1, C2, C3, ..., Cn);
- a receiver (2) of the radiation, at two or more wavelengths, emitted by the emitter (1), that is transmitted by the fluid
- a receiver (3) of the radiation, at two or more wavelengths, emitted by the emitter (1) that is scattered by the fluid;
- inner space (4) between the radiation emitter (1) and the two radiation receivers 82, 3) containing the fluid that is being evaluated.

Furthermore: the emitter (1) and the receiver of the transmitted radiation (2) are located at a pre-defined angle (A1) and a pre-defined distance (L1); the emitter (1) and the receiver of the scattered radiation (3) are located at a pre-defined angle (A2) and a pre-defined distance (L3), along the trajectory of the emitted radiation; the receiver of the scattered radiation (3) is located at a pre-defined distance (L2), perpendicular to the trajectory of the emitted radiation beam.

An embodiment has the characteristic of the emitter (1) being coupled to an optical fiber.

An embodiment has the characteristic of the each of the two receivers (2, 3) being coupled to optical fibers.

An embodiment has the characteristic of comprising one or more divergent lenses at the exit of the emitter (1).

An embodiment has the characteristic of comprising one or more lenses at the entrance of one or both of the receivers (2, 3).

An embodiment has the characteristic of the pre-defined distances and angles (L1, L2, L3, A1, A2) being specified for the intended measurement ranges and precisions.

An embodiment has the characteristic of the distances L1, L2 and L3 being between 0.5mm and 50mm, particularly between 1 and 20mm, more particularly between 2 and 10mm.

An embodiment has the characteristic of the angles A1 and A2 being 180° and 90°, respectively, with a tolerance of 45°, particularly of 30°, more particularly of 15°.

An embodiment has the characteristic of the number of wavelengths being as many as needed for the number of variables to be determined.

An embodiment has the characteristic of the number of variables to be determined being one or more of the following variables: turbidity, concentration of suspended solids, particle-size class, particle-surface morphology, particle shape, and type of material.

The present invention describes furthermore a method for turbidity measurement that comprises the following steps:

- emission from a single emitter (1) of radiation at two or more wavelengths (C1, C2, C3, ..., Cn), either sequentially or simultaneously;
- reception by a receiver (2) of the radiation, at two or more wavelengths (C1, C2, C3, ..., Cn), emitted by the emitter (1) and transmitted by the fluid being evaluated and, as such, being contained in the inner space (4) between the emitter (1) and the two receivers (2, 3);
- reception by a receiver (3) of the radiation, at two or more wavelengths (C1, C2, C3, ..., Cn), emitted by the emitter (1) and scattered by the fluid being evaluated and, as such, being contained in the inner space (4) between the emitter (1) and the two receivers (2, 3);

in which: the emitter (1) and the receiver of the transmitted radiation (2) are located at a pre-defined angle (A1) and a pre-defined distance (L1); the emitter (1) and the receiver of the scattered radiation (3) are located at a pre-defined angle (A2) and a pre-defined distance (L3), along the trajectory of the emitted radiation;); the receiver of the scattered radiation (3) is located at a pre-defined distance (L2), perpendicular to the trajectory of the emitted radiation beam.

An embodiment has the characteristic of comprising the prior calculation of the pre-defined distances and angles, as a function of the desired measurement ranges and precisions.

An embodiment has the characteristic of the number of the wavelengths used being a function of the number of variables to be determined.

An embodiment has the characteristic of comprising: (i) an initial step, in which the radiation received by the receivers (2, 3) in the specified wavelengths (C1, C2, C3) does not result from the emission of radiation by the emitter (1) but from the ambient radiation; (ii) a subsequent step, in which a correction to the values measured by two receivers is established on the basis of the values measured under ambient radiation conditions.

An embodiment has the characteristic of the number of variables to be determined being one or more of the following: turbidity, concentration of suspended solids, particle-size class, particle-surface morphology, particle shape, and type of material.

The present invention describes furthermore an algorithm for the execution of each step of the methods.

The present invention describes furthermore a computerized reading system which comprises the referred algorithm.

**Background**

In Portugal, there are no industrial copyright registrations with respect to turbidity sensors. Accordingly to the United States Patent and Trademark Office, the patent USP 7392813 (1 July 2008) describes a turbidity sensor that determines the concentration of suspended solids for application in cloth-and dish-washing machines, in order to control their water consumption. In addition, patents USP 7659980, 7142299, 7397564, 6842243 and 5828458 concern turbidity sensors that, while differing in the form of the containing boxes, structure, configuration details and supporting parts, quantify the concentration of suspended solids in fluids by means of optical transmission or scattering. No specific applications were presented for any of these sensors devices.

Amongst the commercially-available turbidity sensors that quantify optical scattering, there are simple devices such as those fabricated by 'Vernier Software & Technology'[1] or 'Rickly Hydrological Company'[2], which are aimed at less-demanding applications (e.g. educational purposes). More advanced sensors are those that follow the ISO7027 normative or the USEPA Method 180.1. An example of the former is the Greenspan Analytical TS300 sensor from 'Tyco International Ltd'[3], whereas the latter include the OBS-3+ and OBS-5+ from 'Campbell Scientific'[4], the 6136 sensor from 'YSI'[5] and the WQ730 sensor from 'Global Water Instrumentation'[6]. These more advanced sensors allow continuous in-situ measurements of scattered radiation, at a specific wavelength, and are aimed at application in waste water management, industrial processes as well as environmental water quality monitoring.

The scientific literature describes various approaches to the measurement of turbidity, strongly reflecting the studies' specific objectives. Article [7] presents a turbidity sensor for monitoring wine fermentation in the wine industry, article [8] concerns a turbidity sensor that specifically targets environmental impact assessment for the mining industry, article [9] employs a commercially-available sensor (OBS-3+) for studying sediment transport in coastal waters, and article [10] presents a turbidity sensor for measuring soil erosion and, in particular, in recently burned areas.

Existing turbidity sensors typically concern specific applications, especially as to the type of suspended solids and to the measurement range. By contrast, the present invention aims at a general-purpose turbidity sensor, which can be adjusted to a wide scope of measurement objectives, due to the joint registration of transmitted and scattered radiation as well as to the combination of two or more wavelengths. The present invention can provide valuable information not only on the concentrations of solids suspended in fluids but also on the intrinsic properties of these solids.

References

[1] http://www.vernier.com/products/sensors/trb-bta/

[2] http://www.rickly.com/wqi/TurbiditySensor.htm

[3] http://www.cleanairsystems.com/products/water_quality/ single_ parameter_sensors

[4] http://www.campbellsci.com/turbidity

[5] http://www.ysi.com/media/pdfs/E56-6136-Turbidity-Sensor.pdf

[6] http://www.globalw.com/products/turbidity.html

[7] R. Crespo, L.M. Cárcel, M.A. Pérez, I. Nevares, M. Del Álamo, Suitable at-line Turbidity Sensor for Wine Fermentation Supervision, Internacional Conference on Food Innovation, October 2010

[8] A. Pulfrich, C.A Parkins, G.M. Branch, R.H. Bustamante & C.R. Velásquez, The effects of sediment deposits from Namibian mines on intertidal and subtidal reefs and rock lobster populations, Aquatic Conservation: Marine and Freshwater Ecosystems 13, 257-278, 2003

[8] A. Erm. V. Alari, F. Buchmann, T. Kõuts, U. Raudsepp, K. Loitjarv, Near bottom velocity and turbidity measuments in coastal waters of NW Estonia, IEEE/OES US/EU Baltic International Symposium, 2010

[10] L. Bilro, S.A. Prats, J.L. Pinto, J.J. Keizer, R.N. Nogueira, Design and performance of a plastic optical fibre-based sensor for measuring water turbidity, Measurement Science and Technology, Vol. 21, pp. 107001, 2010

**General description of the invention**

The present invention concerns a portable turbidity sensor that employs optical fibers to measure transmitted as well as scattered radiation. The invention is based upon the optical principles underlying the transmission and scattering of radiation in fluids - in particular gases and liquids - and utilizes radiation emitted at two or more wavelengths and an advanced data processing system. The invention aims at a portable device with multiple functionalities, which are typically implemented in distinct measurement systems ranging from spectrometers (for determining particle size) to existing turbidity sensors and time-consuming laboratory procedures (for measuring suspended solids concentrations. The present invention foresees the adjustment of various intrinsic parameters to permit the measurement of a wide range of variables that are of interest to a broad field of applications related to (agro-)industrial processes, waste water treatment, drinking water supply, silting-up of dams, and surface water quality.

The present invention has the advantages listed underneath.

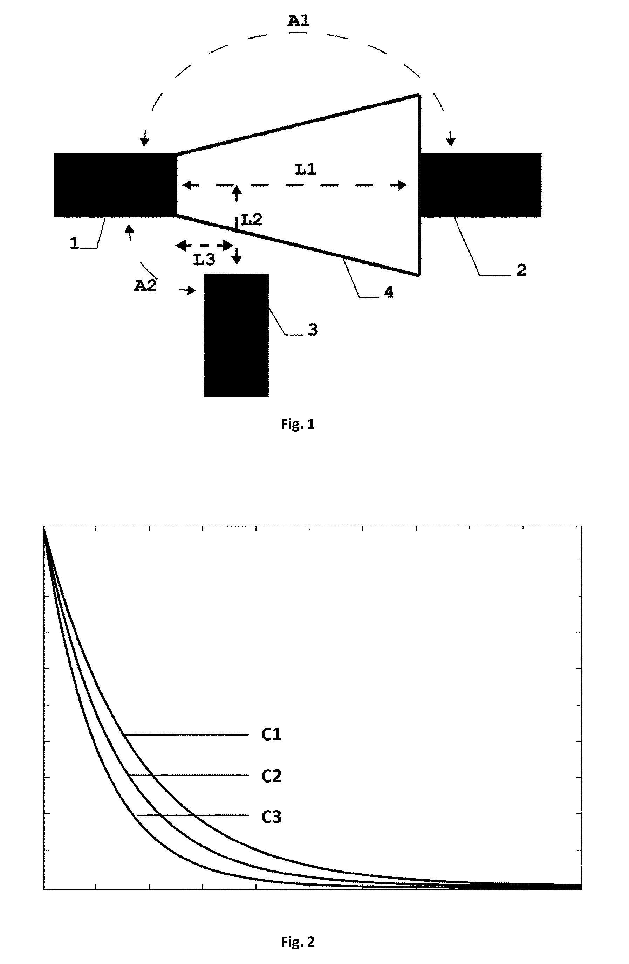

The invention is easy to construct and requires little maintenance. Figure 1 shows the configuration of the measurement unit, with dimensions in the order of centimeters. The small overall size, the reduced dimensions of the composing parts and the low energy consumption combined with the transport of data by optical fiber guarantee the invention's portability and versatility, including in outdoor conditions.

The invention is a multi-parameter sensor that markedly improves the state-of-the-art in turbidity sensing. To this end, has two optical components, i.e. one receiver of transmitted radiation and one of scattered radiation, designated as (2) and (3), respectively, in Figure 1. Transmitted and scattered radiation are both measured at two or more wavelengths, so to obtain distinct information. The design of the measurement cell foresees the adjustment of the distances L1, L2 and L3 in Figure 1 in order to maximize flexibility to specific measurement objectives.

The utilization of radiation at two or more wavelengths and the use of an advanced algorithm for data storage and analysis contribute to the invention's enhanced functionality compared to that of existing turbidity sensors, including those mentioned above. The same baseline configuration will allow that the invention can be used to gather useful information not only on the concentrations of the suspended solids but also on their surface morphology, particle size and shape, and type of material.

The invention is based on optical fiber for sending and receiving the optical signal. It requires a mechanic support and an electronic component for the control and for signal emission and reception. The different parts make up a single device but they can substituted, repaired and maintained in separate, which has obvious economic and logistic advantages.

**Description of the measurement method**

The invention analyses optical transmission and scattering in fluids with particles that are in suspension. The optical transmission is governed by the Beer-Lambert law:

$$I_{180°} = I_0 \cdot e^{-\mu(\lambda) \cdot \tau \cdot I_1} \quad ,$$

where $I_{180°}$ is the detected transmitted irradiance, $I_0$ is the emitted irradiance, $\mu_{100°}(\lambda)$ is the total absorption coefficient, $\tau$ is the turbidity per unit length and 11 is the optic length.

The optical scattering is described by the following empirical mathematical relationship:

$$y = \gamma_{90°}(\lambda) \cdot x + b \quad ,$$

where x is the concentration of suspended solids, $\gamma_{90°}(\lambda)$ is the slope of the adjustment and b is the optical signal under ambient radiation conditions.

This linear relationship is only valid for a specific range of concentrations of suspended solids. This measurement range is defined when calibrating the device.

The emitter optical fiber emits a radiation beam with a constant radiance and such that the intensity distribution of the incident radiation cone depends on the square of the radius. This so-called Lambertian optical source limits the maximum optical path length at which the transmitted optical power is still sufficient to be detected by the receiver.

The distances L1, L2 and L3 and the angles A1 and A2 (Figure 1) can be adjusted in order to obtain the desired measurement range and precision. Too large or too small values for these parameters will lead to loss or saturation of the optical signal for a given sensor configuration. The following table illustrates well the role of the distance (L1) between the emitter and the receiver of the transmitted radiation, in this particular case for a solution with suspended clay particles (<0.002mm).

| Distance L1 (mm) | Measurement range (TSS) |
|---|---|
| 2 | [0; 50 g/l] |
| 5 | [0; 10g/l] |
| 10 | [0; 5 g/l] |

The geometric parameters shown in Figure 1 will depend on the spectral range of the emitted radiation signal (IR-UV), its irradiance (microwatt to watt per square millimeter), the coherence of radiation source (LED or LASER) as well as on the density and type of fluid being evaluated (gas or liquid), the range of suspended solids concentrations (micrograms to decagrams per liter), the diameter of the suspended particles (microns to millimeters), their shape (sphere or plain) and their surface morphology (smooth or wrinkle).

As passive objects, the optical fibers receive the optical signal and transport it to outside of the radiation-fluid interaction zone, which allows the reduced dimensions of the measurement cell. The fibers are curved at a radius that will avoid that they become creased and, thereby, influence the transmission of the optical signal.

**Description of the analysis method**

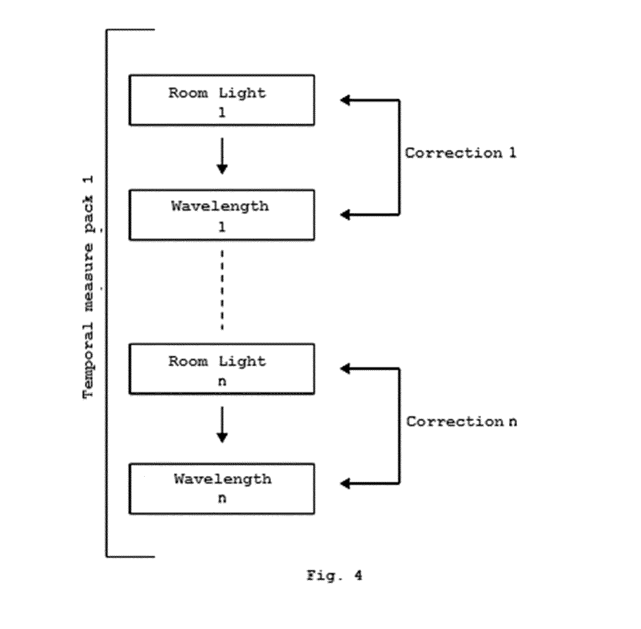

The invention involves an advanced data analysis method that is based on a prior calibration. This calibration determines the measurement range and precision of the sensor readings. The process of data acquisition and storage that is performed by the electronic component of the invention is shown in schematic format in Figure 4. For each of the wavelengths to be employed, first an initial measurement is carried out without the emission of a radiation beam by the emitter, followed by a second measurement under radiation emission at the specific wavelength. Based on these two measurements, a wavelength-specific correction of the transmitted and scattered optical signal is carried out as an adjustment to ambient radiation conditions.

The output of the transmitted radiation signal varies with suspended solid concentration as an exponential decay function. In Figure 2, the exponential curves (C1), (C2) and (C3) correspond to the transmitted radiation output for distinct wavelengths.

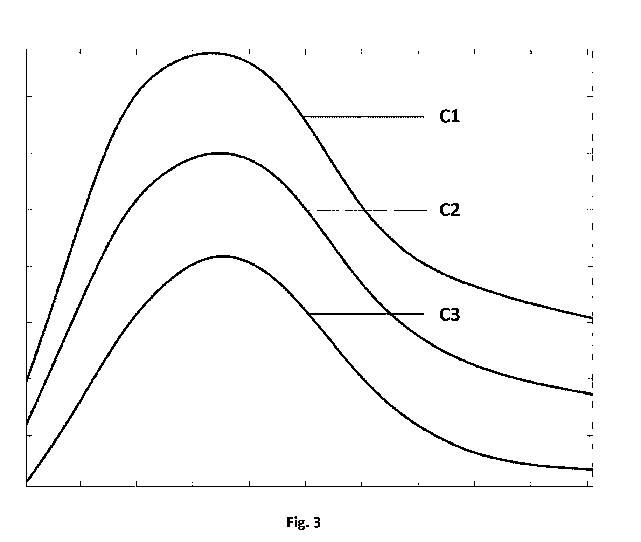

The output of the scattered radiation component varies with suspended solid in a complex manner, as shown in Figure 3. The scattered-radiation output can be decomposed in four regions. From low to high suspended solid concentrations, the scattered radiation output first reveals an n exponential relation with concentration, second a linear relation, third a parabolic relation and, finally, an exponential decay function. The four regions correspond to ranges of suspended solid concentrations that differ depending on the application.

The use of two or more wavelengths (C1, C2 and C3 in Figure 2 and 3) allows obtaining characteristic curves of sensor output for each wavelength separately. These characteristic curves differ in the intensity of the output as well as in their shapes and, thus, the mathematic equations describing the relation(s) between sensor output and the parameter(s) being measured.

The fitted curves depend on the characteristics of the solids in suspension, in particular their size, shape, surface morphology and type of material. Examples of such curves are given in Figures 2 and 3 for transmitted and scattered radiation, respectively.

A global calibration is carried out in accordance with the experimental procedure. Independent calibrations are performed for each of the above-mentioned characteristics of the suspended solids for a specific range of concentrations to establishing the relation with the optical signal. The resulting calibration curves provide adjustments within the range of operation of the sensor (i.e. between saturation and minimum detectable signal).

A full set of such calibration curves permits a 3-dimensional visualization of the relations between the optical signal and two of the above-mentioned characteristics of the suspended solids. This can be done for one or more of the combinations of the four characteristics (size, shape, surface morphology and type of material). If one of these characteristics is known *a-priori,* a single measurement will be sufficient to estimate the value of each of the other three characteristic(s).

For each of the selected wavelengths, the calibration procedure described above provides all the information that is required for a complete characterization of the suspended solids. Each wavelength has an optical response that depends on the four key characteristics of the suspended solids but the calibration curves for each wavelength are sufficiently similar to use differences in signal intensity to describe the suspended particles in terms of their size, shape, surface morphology and type of material..

An embodiment encompasses an advanced portable multi-parameter turbidity sensor that comprises one or more measurement cells, one or more emitters, one or more receivers (or, photodetectors), three or more optical fibers (of which one or more are for emitting radiation with two or more monochromatic wavelengths and two or more for receiving it), and that can quantify optical transmission and scattering and, thereby, determine turbidity as well as the concentration of solids suspended in fluids, their particle-size class, surface morphology, particle shape and type of material.

An embodiment encompasses an advanced portable multi-parameter turbidity sensor that comprises one or more measurement cells, each one containing one emitter fiber with one or none divergent lenses, a transmitted radiation receiving fiber with a photo-detector with one or none convergent lenses, a scattered radiation receiving fiber with a photo-detector with one or none convergent lenses, in which the lenses are used to expand the radiation beam in order to increase the volume of the fluid being evaluated.

An embodiment encompasses an advanced portable multi-parameter turbidity sensor that is characterized by either a single measurement unit in which two or more monochromatic wavelengths are operating alternately in time, or by two or more measurement units with two or more monochromatic wavelengths operating simultaneously in the multiple units but one constant monochromatic wavelength operating in each unit.

An embodiment encompasses an advanced portable multi-parameter turbidity sensor that is characterized by its capacity to quantify the transmission and scattering of two or more incident monochromatic wavelengths, and to relate the transmitted and scattered radiation signal with the turbidity of fluids as well as the concentrations of solids suspended in fluids, their particle size, surface morphology, particle shape and type of material.

An embodiment encompasses an advanced portable multi-parameter turbidity sensor that is characterized by a data analysis system that receives, organizes, calculates, saves and displays numerical and graphical results that are consistent with the use of two or more monochromatic wavelengths for quantifying optical transmission and scattered, thereby allowing a quick comparison with a database comprising the results from prior calibrations.

The preferred embodiments described above are obviously susceptible of being combined with each other. In addition, the claims listed next define the preferred embodiments of the present invention.

**Figures in appendix**

For an easier comprehension of the invention, the following figures are presented in an appendix; these figures represent preferred embodiments of the invention but do not in any way intend to limit the object of the present invention.

Figure 1: Spatial representation of the measurement cell in which

(1) represents the emitter of two or more wavelengths,
(2) represents the receiver of the two or more wavelengths emitted by the emitter that is used for the measurement of transmitted radiation,
(3) represents the receiver of the two or more wavelengths emitted by the emitter that is used for the measurement of scattered radiation,
(4) represents the inner space of the measurement unit and which contains the fluid being evaluated,
(L1) represents the distance between the emitter and the transmission receiver,
(L2) represents the distance between the emitter and the scattering receiver,
(L3) represents the distance between the projected radiation beam emitted by the emitter and the scattering receiver,
(A1) represents the angle between the emitter and the transmission receiver,
(A2) represents the angle between the emitter and the scattering receiver.

Figure 2: Schematic representation of a typical response of the transmitted optical signal as a function of the suspended solids concentration, where (C1), (C2) and (C3) represent different wavelengths.

Figure 3: Schematic representation of a typical response of the scattered optical signal as a function of the suspended solids concentration, where (C1), (C2) and (C3) represent different wavelengths.

Figure 4: Schematic representation of the data acquisition for each wavelength, where

(Natural radiation 1) represents the receiving of external ambient radiation without radiation emission by the sensor's emitter,
(Wavelength 1) represents the emission and receiving of the first wavelength,
(Natural radiation n) represents the receiving of external ambient radiation without radiation emission by the sensor's emitter,
(Wavelength n) represents the emission and receiving of the n-the wavelength,
(Correction 1) represents the correction of external ambient radiation for the first wavelength,
(Correction n) represents the correction of external ambient radiation for the n-th wavelength, and
(Temporal measurement pack 1) represents the set of values of the first temporal measurement for all the wavelengths.

**Claims**

1. Sensor for turbidity measurement in a fluid that is **characterized by** comprising:

a. emitter (1) of a radiation beam with two or more wavelengths (C1, C2, C3, ..., Cn);
b. receiver for measurement of transmitted radiation (2) at the two or more wavelengths (C1, C2,C3, ..., Cn)emitted by the emitter;
c. receiver for measurement of scattered radiation (3) at the two or more wavelengths (C1,C2, C3, ..., Cn) emitted by the emitter;
d. inner space (4) between the emitter (1) and the referred receptors (2, 3), which contains the fluid being evaluated );

, in which: the emitter (1) and the receiver (2) for the transmitted radiation measurement are located at a pre-defined angle (A1) and a pre-defined distance (L1); the emitter (1) and the scattered radiation receiver (3) are located at a pre-defined angle (A2) and a pre-defined distance (L3), along the trajectory of the emitted radiation; the scattered radiation receiver (3) is located at a pre-defined distance (L2 perpendicular to the trajectory of the emitted radiation beam.

2. Sensor for measurement of turbidity in fluids according to the claim 1 that is **characterized by** the emitter (1) comprising an emitting optical fiber.

3. Sensor for measurement of turbidity in fluids according to the previous claims that is **characterized by** the receivers (2, 3) comprising one or more receiving optic fibers.

4. Sensor for measurement of turbidity in fluids according to the previous claims that is **characterized by** comprising one or more divergent lenses at the exit of the emitter (1).

5. Sensor for measurement of turbidity in fluids according to the previous claims that is **characterized by** comprising one or more convergent lenses at the entrance of the receivers (2, 3).

6. Sensor for measurement of turbidity in fluids according to the previous claims that is **characterized by** comprising pre-defined distances and angles (L1, L2, L3, A1, A2) in accordance with the selected measurement ranges and precisions.

7. Sensor for measurement of turbidity in fluids according to the previous claims that is **characterized by** comprising pre-defined distances (L1, L2, L3) between 0.5mm and 50mm, particularly between 1 and 20mm, and more particularly between 2 and 10mm.

8. Sensor for measurement of turbidity in fluids according to the previous claims that is **characterized by** comprising angles A1 and A2 at 180° and 90° respectively, with a tolerance of 45°, particularly of 30°, and more particularly 15°.

9. Sensor for measurement of turbidity in fluids according to the previous claims that is **characterized by** comprising as many operating wavelengths (C1, C2, C3, ..., Cn) as needed for the number of variables to be determined.

10. Sensor for measurement of turbidity in fluids according to the previous claims that is **characterized by** the variables to be determined being one or more of the following: turbidity, concentration of suspended solids, particle-size class, particle shape, surface morphology and type of material.

11. Sensor for measurement of turbidity in fluids according to the previous claims is **characterized by** the fluid to be measured to be a liquid or a gas.

12. Method for determination of turbidity that is **characterized by** comprising the following steps:

> a. emission by a same emitter (1) with two or more wavelengths (C1, C2, C3), either sequentially or simultaneously;
> b. reception by a receiver for transmitted radiation measurement (2) at the two or more wavelengths (C1, C2, C3, ...., Cn) emitted by the emitter (1);
> c. reception by a receiver for scattered light measurement (3) at the two or more wavelengths (C1, C2, C3, ..., Cn) emitted by the emitter (1);

in which: the fluid being evaluated is contained in an inner space of the measurement unit, between the emitter (1) and the receivers (2, 3); the emitter (1) and the transmitted light receiver (2) are located at a pre-defined angle (A1) and a pre-defined distance (L1); the emitter (1) and the scattered-light receiver (3) are located at a pre-defined angle (A2) and a pre-defined distance (L3), along the trajectory of the emitted light; the scattered-radiation receiver (3) is located at a pre-defined distance (L2), perpendicular to the trajectory of the emitted radiation beam).

13. Sensor for measurement of turbidity in fluids according to the previous claims that is **characterized by** comprising the prior establishment of the pre-defined distances and angles for a specific measurement range and precision.

14. Sensor for measurement of turbidity in fluids according to the claims 12 - 13 that is **characterized by** the number of wavelengths used (C1, C2, C3) to be a function of the number of variables to determine.

15. Sensor for measurement of turbidity of fluids according to the claims 12 -14 that is **characterized by** comprising an initial measurement of transmitted and scattered radiation by the receivers (2, 3)without the emitter (1) emitting a radiation beam, so to assess the effects of the ambient radiation conditions at the referred wavelengths (C1, C2, C3, ..., Cn), by comprising a second step for correcting the measurements of transmitted and scattered radiation received by the receivers (2, 3) when the emitter (1) is emitting radiation, and by the possibility that these initial measurements and the corrections can be carried out both before or after the operational use of the sensor, and independently for the different wavelengths..

16. Sensor for measurement of turbidity in fluids according to the claims 12 -15 that is **characterized by** the capacity to determine one or more of the following variables: turbidity, concentration of suspended solids, particle-size class, particle shape, surface morphology and type of material.

17. A computer program according to the claims 12-16 that is **characterized by** comprising an algorithm for executing the different steps of the above-mentioned method.

18. A computerized reading that is **characterized by** comprising the above-mentioned algorithm.

A1

L1

L2

L3

1

2

A2

3

4

**Fig. 1**

C1

C2

C3

**Fig. 2**

**Fig. 3**

Fig. 4

## INTERNATIONAL SEARCH REPORT

| | International application No |
|---|---|
| | PCT/IB2013/053308 |

**A. CLASSIFICATION OF SUBJECT MATTER**
INV.  G01N21/53
ADD.

According to International Patent Classification (IPC) or to both national classification and IPC

**B. FIELDS SEARCHED**

Minimum documentation searched (classification system followed by classification symbols)
G01N  G01J

Documentation searched other than minimum documentation to the extent that such documents are included in the fields searched

Electronic data base consulted during the international search (name of data base and, where practicable, search terms used)

EPO-Internal

**C. DOCUMENTS CONSIDERED TO BE RELEVANT**

| Category* | Citation of document, with indication, where appropriate, of the relevant passages | Relevant to claim No. |
|---|---|---|
| X<br><br><br>Y | WO 2009/065613 A1 (UNIV KAISERSLAUTERN TECHNISCHE [DE]; RIPPERGER SIEGFRIED [DE]; STEINKE) 28 May 2009 (2009-05-28)<br>page 3, last paragraph - page 4<br>page 5, last paragraph<br>page 7, last paragraph - page 8, paragraph 2<br>page 13<br>figure 9a<br>claims 1-6,13,19<br>----- | 1,4-6,<br>8-11,<br>13-18<br>7 |
| X | WO 2006/129054 A2 (SCHLUMBERGER TECHNOLOGY BV [NL]; SCHLUMBERGER HOLDINGS; SCHLUMBERGER C)<br>7 December 2006 (2006-12-07)<br>figures 2a,2b<br>page 19, line 34 - page 20, line 18<br>-----<br><br>-/-- | 1,4-6,<br>8-18 |

| [X] Further documents are listed in the continuation of Box C. | [X] See patent family annex. |
|---|---|

* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 26 September 2013 | 02/10/2013 |

| Name and mailing address of the ISA/ | Authorized officer |
|---|---|
| European Patent Office, P.B. 5818 Patentlaan 2<br>NL - 2280 HV Rijswijk<br>Tel. (+31-70) 340-2040,<br>Fax: (+31-70) 340-3016 | D'Alessandro, Davide |

Form PCT/ISA/210 (second sheet) (April 2005)

## INTERNATIONAL SEARCH REPORT

| International application No |
|---|
| PCT/IB2013/053308 |

C(Continuation).    DOCUMENTS CONSIDERED TO BE RELEVANT

| Category* | Citation of document, with indication, where appropriate, of the relevant passages | Relevant to claim No. |
|---|---|---|
| X | DE 103 60 563 A1 (BSH BOSCH SIEMENS HAUSGERAETE [DE]) 14 July 2005 (2005-07-14) figure 2 paragraph [0021] - paragraph [0027] paragraph [0042] - paragraph [0044] ----- | 1,3-6, 8-18 |
| X | DE 102 57 238 A1 (OPTOTRANSMITTER UMWELTSCHUTZ T [DE]; EPIGAP OPTOELEKTRONIK GMBH [DE]) 24 June 2004 (2004-06-24) figure 4 paragraphs [0001], [0013], [0014] - [0017], [0024], [0026], [0042], [0046], [0051] ----- | 1-6, 8-11, 13-18 |
| X | DE 196 26 203 A1 (AEG HAUSGERAETE GMBH [DE]) 2 January 1998 (1998-01-02)<br><br>column 3, line 1 - line 32 column 5, line 38 - line 56 figure 4 claim 7 ----- | 1-6, 8-11, 13-18 |
| Y | L. BILRO; S.A. PRATS; J.L. PINTO; J.J. KEIZER; R.N. NOGUEIRA: "Design and performance of a plastic optical fibre-based sensor for measuring water turbidity", MEASUREMENT SCIENCE AND TECHNOLOGY, vol. 21, 2010, page 107001, XP20198514, cited in the application | 7 |
| A | abstract page 2, left-hand column, paragraph 2 - right-hand column page 3, right-hand column figure 1 ----- | 1-3,12, 13 |
| A | US 2004/017569 A1 (PAYNE FRED A [US]) 29 January 2004 (2004-01-29) paragraphs [0002], [0026], [0031], [0032], [0040] figure 2 ----- | 1-18 |
| A | US 4 290 695 A (SCHMITT HAROLD W) 22 September 1981 (1981-09-22) column 2, line 8 - line 23 column 5, line 53 - column 6, line 29 column 8, line 8 - line 17 column 9, line 21 - line 35 column 7, line 19 - line 29 figures 1,7 ----- | 1-18 |

Form PCT/ISA/210 (continuation of second sheet) (April 2005)

## INTERNATIONAL SEARCH REPORT
Information on patent family members

| International application No |
|---|
| PCT/IB2013/053308 |

| Patent document cited in search report | | | Publication date | Patent family member(s) | | | Publication date |
|---|---|---|---|---|---|---|---|
| WO 2009065613 | A1 | | 28-05-2009 | DE 102007056682 | A1 | | 04-06-2009 |
| | | | | WO 2009065613 | A1 | | 28-05-2009 |
| WO 2006129054 | A2 | | 07-12-2006 | GB 2426579 | A | | 29-11-2006 |
| | | | | GB 2450182 | A | | 17-12-2008 |
| | | | | US 2009216463 | A1 | | 27-08-2009 |
| | | | | WO 2006129054 | A2 | | 07-12-2006 |
| DE 10360563 | A1 | | 14-07-2005 | NONE | | | |
| DE 10257238 | A1 | | 24-06-2004 | NONE | | | |
| DE 19626203 | A1 | | 02-01-1998 | NONE | | | |
| US 2004017569 | A1 | | 29-01-2004 | NONE | | | |
| US 4290695 | A | | 22-09-1981 | NONE | | | |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P7392813 A
- US P7659980 A
- US 7142299 B

- US 7397564 B
- US 6842243 B
- US 5828458 A

**Non-patent literature cited in the description**

- **R. CRESPO ; L.M. CÁRCEL ; M.A. PÉREZ ; I. NEVARES ; M. DEL ÁLAMO.** Suitable at-line Turbidity Sensor for Wine Fermentation Supervision. *Internacional Conference on Food Innovation,* October 2010
- **A. PULFRICH ; C.A PARKINS ; G.M. BRANCH ; R.H. BUSTAMANTE ; C.R. VELÁSQUEZ.** The effects of sediment deposits from Namibian mines on intertidal and subtidal reefs and rock lobster populations. *Aquatic Conservation: Marine and Freshwater Ecosystems,* 2003, vol. 13, 257-278

- **A. ERM ; V. ALARI ; F. BUCHMANN ; T. KÕUTS ; U. RAUDSEPP ; K. LOITJARV.** Near bottom velocity and turbidity measuments in coastal waters of NW Estonia. *IEEE/OES US/EU Baltic International Symposium,* 2010
- **L. BILRO ; S.A. PRATS ; J.L. PINTO ; J.J. KEIZER ; R.N. NOGUEIRA.** Design and performance of a plastic optical fibre-based sensor for measuring water turbidity. *Measurement Science and Technology,* 2010, vol. 21, 107001